# EUROPEAN PATENT APPLICATION

(11) **EP 3 401 179 A1**
(43) Date of publication of application: **14.11.2018**
(21) Application number: 18170651.6
(22) Date of filing: 03.05.2018
(51) Int. Cl.: B60W 30/06, G07C 9/00

(54) **A DEVICE FOR CONTROLLING A MANEUVER OF A VEHICLE**

(30) Priority: 09.05.2017 CN 201710321927
(71) Applicant: Valeo Comfort and Driving Assistance, 94046 Créteil Cedex (FR)
(72) Inventor: SCHULER, Stéphane, Shenzhen, Guangdong 518128 (CN)
(74) Representative: Delplanque, Arnaud

(57) **Abstract**

A device is used for controlling a maneuver of a vehicle (8) in or out of a park area (5) secured by a remotely controlled access system (4).

The device comprises a module adapted to monitor said maneuver as long as a user action is detected on an electronic device (2) and to control the operation of the access system (4).

## Description

### TECHNICAL FIELD OF THE INVENTION

The invention relates to vehicles having an automatic maneuver capability and more precisely to a device aimed at controlling a maneuver of a vehicle.

### BACKGROUND INFORMATION AND PRIOR ART

It is known to provide vehicles with an automatic parking capability, such as described for instance in the patent application published as WO 2016/185 151.

Nowadays, the automatic parking function are usually performed under the supervision of the driver, located outside the vehicle, controlling the maneuver execution using a remote control device that may be his Smartphone.

Besides, in many regions around the world, it is quite common to possess a garage that is accessible through a remote controlled door. Another remote control device is usually provided to trigger the opening of a garage door or a gate. Such access systems are generally known as GDO (for *"Garage Door Opener*") and the devices remotely controlling them UGDO (for "*Universal Garage Door Opener*").

### SUMMARY OF THE INVENTION

In this context, the invention provides a single device for controlling a maneuver of a vehicle in or out of a park area secured by a remotely controlled access system, said device comprising a module suited to monitor said maneuver as long as a user action is detected on an electronic device and to control the operation (*i.e.* for example to trigger the opening) of the access system.

Thanks to the use of this module, the automatic maneuver and the operation of the access system can be managed consistently, without the need of separate user inputs to trigger each system.

For clarity, the access system may be for instance a garage door, a gate, a barrier or a lift, that needs to be operated while maneuvering the car.

The following optional (and thus not exhaustive) features are also proposed:
- the module is suited to control operation of the access system (*e.g.* to control the movements of the garage door) by instructing a communication circuit to transmit a wireless instruction (in practice: together with access credentials) to a mechanism for operating the access system (in practice: to a dedicated receiver that controls in turn the mechanism of the access system);
- the communication circuit is suited to establish a wireless data link with said mechanism and to transmit said wireless instruction via said wireless data link;
- the communication circuit is suited to transmit the wireless instruction by generating a sub GHz radiofrequency signal;
- the vehicle includes a button suited to send a given instruction via a bus to the communication circuit;
- the communication circuit generates said radiofrequency signal upon receiving the given instruction;
- the module is also suited to send the given instruction to the communication circuit via the bus;
- the module is suited to receive data confirming the detection of the user action via a wireless communication established with the electronic device;
- the module is embedded in the electronic device;
- the module is suited to detect the user action via a user interface of the electronic device;
- the module is suited to control said maneuver by sending a corresponding instruction to an electronic control unit inside the vehicle;
- the maneuver is performed by an automatic parking unit controlled by said module;
- the automatic parking unit includes at least one sensor for capturing data related to the vehicle environment;
- the automatic parking unit includes a processing circuit for processing data captured by the sensor;
- the automatic parking unit includes a control circuit for controlling a vehicle motion control mechanism based on the processed data;
- the automatic parking unit is suited to compute an appropriate time to operate the access system;
- the automatic parking unit is suited to communicate said appropriate time to the module such that the module may control operation of the access system at said appropriate time;
- said module is suited to control a remotely controlled comfort equipment (such as lighting) that is conveniently operated during the vehicle maneuver;
- said module is suited to control the access system to close after the maneuver is completed.

Other features and advantages of the embodiments of the present invention will be better understood upon reading of preferred embodiments thereof with reference to the appended drawings.

### BRIEF DESCRIPTION OF THE DRAWINGS

Figure 1 represents the possible context of a first embodiment of the invention.
Figure 2 schematically shows elements used in this first embodiment.
Figure 3 schematically shows elements used in a possible variation of this first embodiment.
Figure 4 represents the possible context of a second embodiment of the invention.
Figure 5 schematically shows elements used in this second embodiment.

### DETAILED DESCRIPTION OF EXAMPLE(S)

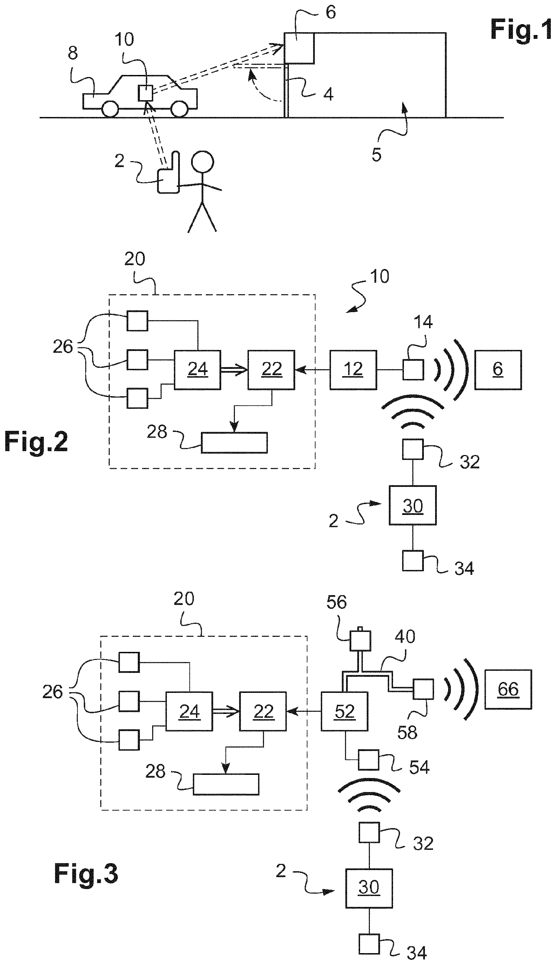

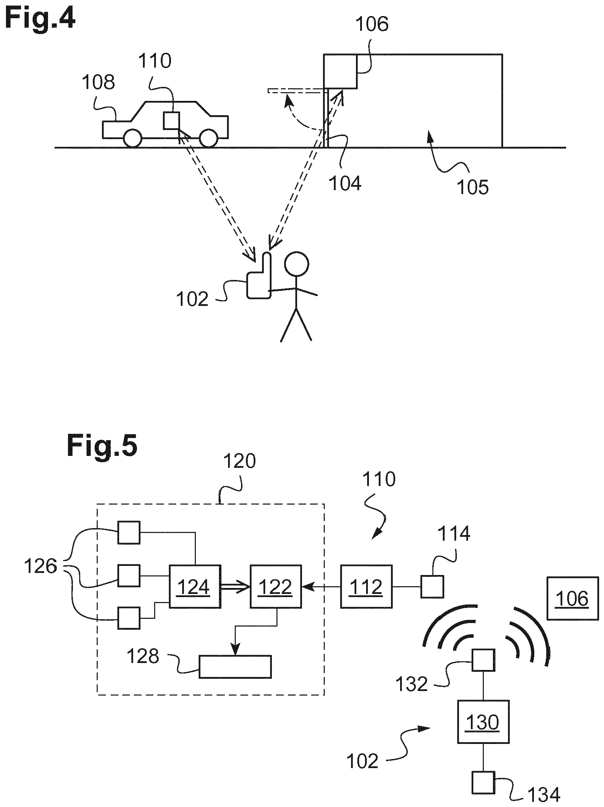

Figures 1 and 4 show possible contexts in which the invention may be used. The invention is however not limited to these possible contexts.

In these contexts, a vehicle 8; 108 is about to enter a park area 5; 105 (here a garage) secured by an access system 4; 104 (here a garage door).

A mechanism 6; 66; 106 for operating the access system 4; 104 (here for opening or closing the garage door) can be remotely controlled, *i.e.* operated when receiving a wireless instruction provided it has received valid credentials.

The vehicle 8; 108 is equipped with an automatic parking unit 20; 120 capable of maneuvering the vehicle 8; 108 into the park area 5; 105 provided a user action is (continuously) detected on an electronic device 2; 102, here the user's smartphone.

The operation of the access system 4; 104 (here the opening of the garage door) is triggered, preferably synchronously to the vehicle maneuver, either by a module 12; 52 of the vehicle onboard system 10 (Figure 1) or by a module 130 of the electronic device 102 (Figure 4).

According to a first embodiment schematically represented in Figure 2 and usable in the context of Figure 1, the vehicle onboard system 10 comprises the automatic parking unit 20, an electronic control module 12 and a data communication circuit 14.

The data communication circuit 14 is suited to establish a wireless data link with the mechanism 6 for operating the access system 4. In practice, this wireless data link is for instance a Bluetooth data link or a data link in a wireless local area network (WLAN).

The electronic device 2 (here a smartphone as already mentioned) comprises a control unit 30 (such as a microcontroller), a data communication circuit 32 and a human-machine interface (HMI) or user interface 34 (here a touch screen).

The data communication circuit 32 of the electronic device 2 and the data communication circuit 14 in the vehicle 8 can establish a wireless communication, here of the same type as the wireless data link between the data communication circuit 4 and the mechanism 6 (*i.e.* a Bluetooth data link or a data link in a WLAN). As a possible variation, the wireless communication and the wireless data link may be of different types (then likely involving several communication circuits in the vehicle 8).

When the control unit 30 detects a user action on the user interface 34 (*e. g.* a predefined user action requested to the user by an appropriate HMI on the user interface 34), the control unit 30 instructs the data communication circuit 32 to send data confirming detection of this pre-defined user action to the data communication circuit 14 of the vehicle 8 (via the wireless communication established between the data communication circuit 14 of the vehicle 8 and the data communication circuit 32 of the electronic device 30).

The electronic control module 12 can thus receive these data via the data communication circuit 14.

As long as a user action is detected on the electronic device 2 (*i.e.* as long as the electronic control module 12 receives the data confirming user action), the electronic control module 12 commands and/or monitors said maneuver by transmitting a corresponding instruction to the automatic parking unit 20.

### (Operation of the automatic parking 20 unit is described below.)

Should however the user fail to perform the predefined user action on the user interface 34, the electronic control module 12 would no longer receive the data confirming the user action and would then instruct the automatic parking unit 20 to stop the maneuver.

Back to the situation where the user continuously interacts with the user interface 34 of the electronic device 2, at a point of time during the vehicle maneuver (*i.e.* synchronously to the maneuver), the electronic control module 12 instructs the data communication circuit 14 to send a wireless instruction to the mechanism 6 together with valid credentials (via the data link established between the data communication circuit 14 and the mechanism 6) to operate the access system 4.

The transmission of the wireless instruction by the data communication circuit 14 may be precisely synchronized with the maneuver. In this goal, the automatic parking unit 20 may for instance be suited to compute an appropriate time to operate the access system 4 (possibly taking into account the time needed to operate the access system 4) and to communicate said appropriate time to the electronic control module 12 such that the electronic control module 12 may control operation of the access system 4 at said appropriate time.

As already mentioned, the access system 4 is here a garage door. According to a possible variation, the access system could be an elevator making it possible for the vehicle to access the park area. It could also be an area closed by a gate or barrier.

In addition, according to a possible embodiment, the electronic control module 12 also commands the data communication circuit 14 to send an instruction to control a comfort equipment (e.g. a garage light) associated with the access system.

As a result of the wireless instruction received from the onboard system 10 of the vehicle 8, the mechanism 6 operates the access system 4 (*i.e.* here opens the garage door) to allow the vehicle 8 entering the park area 5 (here the garage).

The electronic control module 12 can then further command and monitor the automatic parking unit 20 to drive the vehicle 8, passing the cleared access system 4 and into the park area 5.

Once inside the park area 5, with the vehicle maneuver completed and the vehicle safely parked (engine is off), the electronic control module 12 may instruct the data communication circuit 14 to send a wireless instruction to the mechanism 6 in order to close the access system 4. For existing GDO, the closure of the access system may be initiated by the GDO itself following a timeout (time elapsed within any received instructions to keep the access system open).

Figure 3 shows an alternative arrangement usable in the context of Figure 1.

According to this possible solution, the vehicle onboard system comprises the automatic parking unit 20, an electronic control module 52, a data communication circuit 54, a button 56 and a radio communication circuit 58.

The button 56 and the radio communication circuit 58 are connected via a bus 40. When the user depresses the button 56, an actuation instruction is transmitted on the bus 40. Upon detecting this actuation instruction on the bus 40, the radio communication circuit 58 generates a sub GHz radiofrequency signal (*i.e.* a radiofrequency signal having a main frequency below 1 GHz) intended to the mechanism 66 (and corresponding to the wireless instruction and credentials mentioned above).

The mechanism 66 is designed to operate the access system 4 (here to open the garage door) when receiving the radiofrequency signal with correct credentials.

Thus, activation of the button 56 by the user leads to operating the access system 4 of the park area 5.

The electronic device 2 (which is for instance a smartphone) comprises a control unit 30 (such as a microcontroller), a data communication circuit 32 and a human-machine interface (HMI) or user interface 34 (here a touch screen).

The data communication circuit 32 of the electronic device 2 and the data communication circuit 54 in the vehicle can establish a wireless communication, for instance a Bluetooth communication or a communication in a wireless local area network (WLAN).

When the control unit 30 detects a pre-defined user action on the user interface 34, the control unit 30 instructs the data communication circuit 32 to send data confirming detection of this pre-defined user action to the data communication circuit 14 of the vehicle.

The electronic control module 52 can thus receive these data via the data communication circuit 54.

As long as a user action is detected on the electronic device 2 (*i.e.* as long as the electronic control module 52 receives the data confirming user action), the electronic control module 52 commands and/or monitors said maneuver by transmitting a corresponding instruction to the automatic parking unit 20.

At a point in time during the maneuver (*i.e.* synchronously to the maneuver), the electronic control module 52 transmits the actuation instruction (identical to the instruction provided by button 56 upon being depressed) on the bus 40, which actuation is received by the radio communication circuit 58. The radio communication circuit 58 thus emits the radiofrequency signal, which results, as explained above, in the mechanism 66 operating the access system 4 (here opening the garage door), making it possible for the vehicle to clear the access system 4.

The transmission of the radiofrequency signal by the radio communication circuit 58 may be precisely synchronized with the maneuver. In this goal, the automatic parking unit 20 may for instance be suited to compute an appropriate time to operate the access system 4 (possibly taking into account the time needed to operate the access system 4) and to communicate said appropriate time to the electronic control module 52 such that the electronic control module 52 may control operation of the access system 4 (by transmitting the actuation instruction on the bus 40) at said appropriate time.

Thus, a conventional mechanism 66 triggered by a sub Ghz radiofrequency signal can be activated synchronously while the automatic parking maneuver is taking place.

Figure 5 shows another possible embodiment in the context of Figure 4.

According to this embodiment, the vehicle onboard system 110 comprises the automatic parking unit 120, an electronic control unit 112 and a data communication circuit 114.

The electronic device 102 (*e.g.* a smartphone) comprises a control module 130 (such as a microcontroller), a data communication circuit 132 and a human-machine interface (HMI) 134 (here a touch screen).

The data communication circuit 132 of the electronic device 102 and the data communication circuit 114 of the vehicle 108 can establish a wireless communication (for instance a Bluetooth communication or a communication in a WLAN).

The data communication circuit 132 of the electronic device 102 is also suited to establish a wireless data link with the mechanism 106 for operating the access system 104. In practice, this wireless data link is for instance a Bluetooth data link or a data link in a wireless local area network (WLAN).

In the example described here, the wireless data link between the data communication circuit 132 and the mechanism 106 is of the same type as the wireless communication between the data communication circuit 132 of the electronic device 102 and the data communication circuit 114 of the vehicle 108. As a possible variation, the wireless communication and the wireless data link may be of different types (then likely involving several communication circuits of the electronic device 102).

The control module 130 is suited to detect a user action on the user interface 134 (*e.g.* a predefined user action requested to the user by an appropriate display on the user interface 134) and, as long as such a user action is detected, to send a continuation instruction to the electronic control unit 112 (via the wireless communication established between data communication circuit 114 and data communication circuit 132 as explained above) to confirm the vehicle maneuver may safely proceed further.

Precisely, when the electronic control unit 112 receives the continuation instruction, the electronic control unit 112 commands the automatic parking unit 120 to carry on with the maneuver, as explained below.

At some point of time during the maneuver, when the automatic parking unit 120 computes that the operating of the access system needs to be started to allow a continuous park maneuver, the control module 130 sends a wireless instruction to the mechanism 106 via the wireless data link established between the data communication circuit 132 of the electronic device 102 and the mechanism 106. Operation of the access system may thus be controlled synchronously to the vehicle maneuver. The decision to trigger the access system operation may also be taken asynchronously (relative to the progress of the maneuver), for instance at the start of the maneuver or when the maneuver cannot proceed any longer without the access system to be operated.

Upon receiving the wireless instruction and correct credentials, the mechanism 106 operates (here opens) the access system 104 (here the garage door) such that, under the control of the automatic parking unit 120, the vehicle 108 may clear the access system 104 and continue the maneuver (here: enter the park area 105).

In addition, according to a possible embodiment, the control module 130 also commands the data communication circuit 132 to send an instruction to control a comfort equipment (*e.g.* a garage lighting) associated or independent to the access system 104.

At any time, if the electronic control unit 112 fails to receive the continuation instruction for a predetermined period of time (possibly because the user action is no longer detected on the user interface 134 and the control module 130 has thus stopped sending the continuation instruction), the electronic control unit 112 instructs the automatic parking unit 120 to stop the maneuver.

Operation of the automatic parking unit 20, 120 is now described.

The automatic parking unit 20, 120 comprises at least one sensor 26; 126 (generally a plurality of sensors), a processing circuit 24; 124, a control circuit 22; 122 and at least a vehicle motion control mechanism 28; 128 (such as a power train and/or a steering system and/or a braking system).

Each sensor 26; 126 (for instance a video camera or an ultrasonic sensor) captures data representative of the environment of the vehicle 8; 108.

The processing circuit 24; 124 processes (*e.g.* analyzes) the (raw) data captured by the sensor(s) 26; 126 to generate processed data, which also incorporates the vehicle 8; 108 environment, but in a more synthetic manner. The processed data contains for instance the location of detected objects in the environment of the vehicle 8; 108.

The control circuit 22; 122 receives these processed data and a command from the electronic control module or unit 12; 52; 112.

When the command received from the electronic control module or unit 12; 52; 112 indicates the automatic maneuver should proceed, the control circuit 22; 122 controls the vehicle motion control mechanism(s) 28; 128 based on the processed data so as to drive the vehicle 8; 108 in its environment.

When the command received from the electronic control module or unit 12; 52; 112 indicates the automatic maneuver should be stopped, the control circuit 22; 122 controls the vehicle motion control mechanism(s) 28; 128 to halt the vehicle 8; 108.

The examples described here involve a vehicle entering into a park area. The invention is however not limited to this situation and also applies in particular to the case of a vehicle maneuvering out of a park area.

## Claims

1. A device for controlling a maneuver of a vehicle (8; 108) in or out of a park area (5; 105) secured by a remotely controlled access system (4; 104), said device comprising a module (12; 52; 130) suited to monitor said maneuver as long as a user action is detected on an electronic device (2; 102) and to control the operation of the access system (4; 104).

2. The device according to claim 1, wherein the module (12; 52; 130) is suited to control the operation of the access system (4; 104) by instructing a communication circuit (14; 58; 132) to transmit a wireless instruction to a mechanism (6; 66; 106) for controlling the access system (4; 104).

3. The device according to claim 2, wherein the communication circuit (14; 132) is suited to establish a wireless data link with said mechanism (6; 106) and to transmit said wireless instruction via said wireless data link.

4. The device according to claim 2, wherein the communication circuit (58) is suited to transmit the wireless instruction by generating a sub GHz radiofrequency signal.

5. The device according to claim 4, wherein the vehicle (8) includes a button (56) suited to send a given instruction via a bus (40) to the communication circuit (58), the communication circuit (58) generating said radiofrequency signal upon receiving the given instruction, and wherein the module (52) is also adapted to send the given instruction to the communication circuit (58) via the bus (40).

6. The device according to any of claims 1 to 5, wherein the module (12; 52) is suited to receive data confirming the detection of the user action via a wireless communication established with the electronic device (2).

7. The device according to any of claims 1 to 3, wherein the module (130) is embedded in the electronic device (102) and suited to detect the user action via a user interface (134) of the electronic device (102) and to control said maneuver by sending a corresponding instruction to an electronic control unit (112) inside the vehicle (108).

8. The device according to any of claims 1 to 7, wherein the maneuver is performed by an automatic parking unit (20; 120) controlled by said module (12; 52; 130).

9. The device according to claim 8, wherein the automatic parking unit (20; 120) includes at least one sensor (26; 126) for capturing data related to the vehicle environment, a processing circuit (24; 124) for processing data captured by the sensor (26; 126) and a control circuit (22; 122) for controlling a vehicle motion control mechanism (28; 128) based on the processed data.

10. The device according to claim 8 or 9, wherein the automatic parking unit (20; 120) is suited to compute an appropriate time to operate the access system (4; 104).

11. The device according to any of claims 1 to 10, wherein said module is suited to control a remotely controlled comfort equipment.

12. The device according to any of claims 1 to 11, wherein said module (12) is suited to control the access system (4) to close after the maneuver is completed.
